# EUROPEAN PATENT SPECIFICATION

(11) **EP 3 731 942 B1**
(45) Date of publication and mention of the grant of the patent: **09.03.2022**
(21) Application number: 19706742.4
(22) Date of filing: 17.01.2019
(51) Int. Cl.: A63B 71/06, H04M 1/725, G06F 3/0488, G06Q 10/00, G08B 7/06, G08B 5/36

(54) **REFEREE SUPPORT ARRANGEMENT**
UNTERSTÜTZUNGSANORDNUNG FÜR SCHIEDSRICHTER
ENSEMBLE DE SUPPORT D'ARBITRE

(30) Priority: 05.02.2018 HU 1800047
(43) Date of publication of application: 04.11.2020
(73) Proprietor: Maruzsi, László, 1158 Budapest (HU); Juhász, Márton, 7632 Pécs (HU)
(72) Inventor: Maruzsi, László, 1158 Budapest (HU); Juhász, Márton, 7632 Pécs (HU)
(74) Representative: Pintz, György
(86) International application number: PCT/IB2019/050385
(87) International publication number: WO 2019/150213

(56) References cited:
- WO-A1-94/05380
- WO-A1-2004/071598
- US-A1- 2005 162 257
- US-B2- 9 646 209

## Description

The subject of the invention is a referee support arrangement that includes a central mobile unit, a server, and a central control device.

The state of the art includes the following solutions.

International patent document No. WO2004073809A1 describes an electronic card that supports the work of referees in ball games, which is fitted with two lamps (red and yellow) and is capable of remembering events.

International publication document No. WO02087707A1 describes a hand-held computer device for referees, which is fitted with a microphone, loudspeaker, keyboard, screen, signal receiver, and special buttons, and is in wireless connection with, among others, flags, a server, the display of the stadium, a media room, and a central computer.

The invention described in international patent document No. WO9405380A1 and US patent document No. US5745029A is a referee support system used in soccer and other ball games, which includes a central computer, flags fitted with signal devices, and a signal receiver unit.

German publication document No. DE19718887A describes a smart penalty card, which is connected to a device fitted with a sound recording unit and a keyboard. The display of the electronic device clearly divided into two parts, which correspond to the two teams. On these parts, the yellow and red cards are indicated in separate columns.

US patent application No. US 2005/162257 A1 relates to a referee support arrangement. It describes a system of devices that can be integrated into elements that are designed to assist the referee in football, such as the referee's whistle, the linesmen's flags, the playing area and the ball. A common disadvantage of the solutions representing the state of the art is that they provide assistance for only some of the tasks of referees, and the central unit held by a referee is too large and difficult to handle.

The purpose of the invention is to eliminate the shortfalls of the known solutions, and to implement an arrangement and a corresponding procedure that is capable of integrating all activities of a referee, as well as documenting and exporting all events. Another purpose is to replace plastic cards and pens currently used as penalty cards by a solution that is of the same size as the cards currently used and is capable of producing light signals immediately on two sides, as well as recording and documenting sounds. Another purpose is to replace other additional equipment carried by a referee, such as micro-ports, radio receiver and transmitter units, and all other wired device.

The inventive step is based on the recognition that an invention, which is more advantageous than the previous ones, may be created by implementing the arrangement according to claim 1. This recognition makes it possible to execute any referee task using the arrangement in a simpler manner than ever before.

In line with the desired purpose, the most general implementation form of the solution according to the invention may be realized according to claim 1. The various implementation forms are described in the dependent claims.

In general, the solution is a referee support arrangement that includes a central mobile unit, a server, and a central control device; the central mobile unit and the server are connected via a wireless communication channel, and the server and the central control device are connected via a communication channel; the central mobile unit includes an internal memory and control unit, a communication module, a power supply unit, a microphone, and one or more touchscreens. A distinctive feature of the invention is that the arrangement includes a lineman stick, a camera, an offside and video referee system, and a light signalling system via a wireless communication channel and that the central mobile unit is connected to a lineman stick, a camera, an offside and video referee system, and a light signalling system via a wireless communication channel; the central mobile unit is fitted with a distance measuring unit and a lighting unit; the communication module, the distance measuring unit, and the microphone are connected to an internal memory and control unit; the lineman stick is fitted with at least one lighting unit; the light signalling system is fitted with a lighting strip containing lighting units.

In another implementation form, the central mobile unit is fitted with two touchscreens; each touchscreen is assigned to one of the two teams playing each other; the touchscreens are mounted onto two opposing sides of the central mobile unit.

In another implementation form, the central mobile unit is connected to the server, the lineman stick, the camera, the offside and video referee system, and the light signalling system by a communication module.

Another distinctive feature may be that the central mobile unit includes a fingerprint scanning unit and/or an acceleration sensor, and the fingerprint scanning unit and the acceleration sensor is connected to the internal memory and control unit.

Another distinctive feature may be that the central control device is connected to the lineman stick and/or the camera and/or the offside and video referee system and/or the light signalling system directly through a wireless communication channel.

In another implementation form, the touchscreen is covered by a glass surface, a cover, and a protruding foil, and the edge of the central mobile unit is surrounded by a frame.

In another implementation form, the central mobile unit is fitted with an even number of and advantageously totalling to two glass surfaces, two covers, and two protruding foils that are located on the two opposing sides of the central mobile unit in equal numbers.

Another distinctive feature may be that a wireless charging coil is installed in the central mobile unit.

In another implementation form, the lineman stick is fitted with a processor, a power supply unit and a button connected to the processor, and a vibrating motor and a charging connector unit connected to the power supply unit.

In another implementation form, the lineman stick can be fitted with a lineman stick display. Another distinctive feature may be that the light signalling system is fitted with a power supply unit, which is connected to the lighting strip, and a processor and at least one converter, which are connected to the power supply unit.

The invention is presented in more detail using a drawing of a possible implementation form. On the attached drawings,
Figure 1 shows an advantageous relative layout of parts of the arrangement,
Figure 2 shows an exploded spatial drawing of the central mobile unit,
Figure 3 shows a schematic drawing of the lineman stick viewed from above, and
Figure 4 shows the connection diagram of the light signalling system.

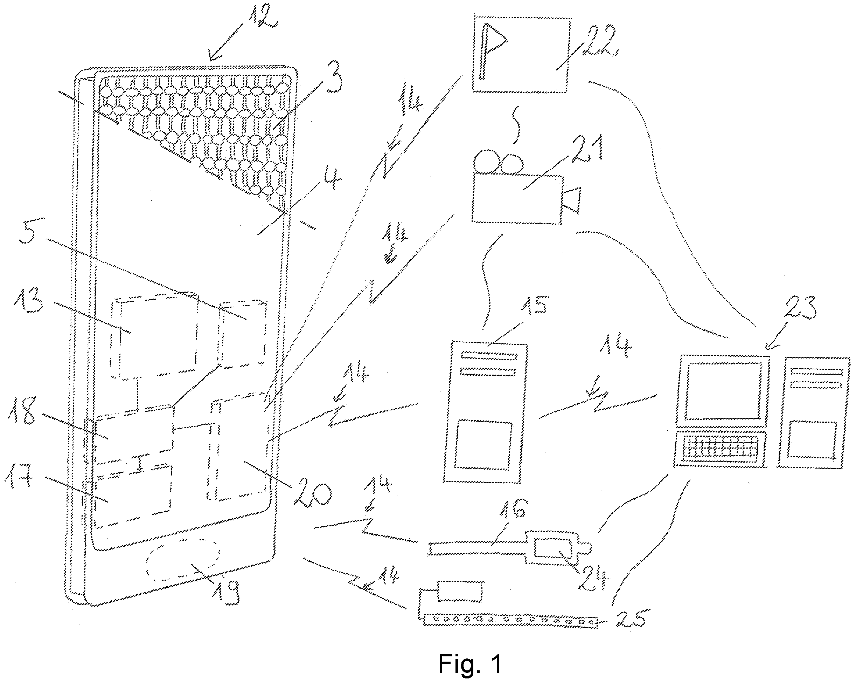

Figure 1 shows the connection diagram of the arrangement. As shown on this figure, the main components of the referee support arrangement include the central mobile unit 12 and the server 15, lineman stick 16, camera 21, offside and video referee system 22, and light signalling system 25 connected to it via a wireless communication channel 14. The point of the arrangement is that it integrates all activities carried out by a referee, and it exports the components that are eligible for being documented. The arrangement may be used in any sport where cards are used to indicate sanctions during a game. In fact, the central mobile unit 12 is itself the penalty card. The communication channel 14 may be GSM, Bluetooth, Wifi, infra, radio frequency-based, or ultrasound connection. Advantageously, the communication channel 14 is encrypted. The central mobile unit 12 is also connected to the central control device 23 through the server 15; a communication channel 14 is established between the central mobile unit 12 and the server 15, as well as the server 15 and the central control device 23. Communication is facilitated by the communication module 20. The server 15 processes, stores, and converts recorded materials and data pertaining to the game and the players, and then it forwards such data packets to the central control device 23, so that it can transmit the data to the appropriate target audience, such as television viewers or the stadium display screen. The camera 21 is a wide-angle camera, or even a camera system, and its task is to collect video footage during games. The central control device 23 is in wired or wireless, advantageously encrypted wireless, connection with the server 15 through the communication channel 14, and it may be connected to the camera 21, the lineman stick 16, the offside and video referee system 22, and the light signalling system 25 as well. The server 15, the camera 21, the lineman stick 16, the offside and video referee system 22, and the light signalling system 25 are also connected to each other directly, so that the events could be recorded smoothly. The lineman stick 16 is fitted with a lineman stick display 24, and it may also be fitted with a lighting unit, a button, a processor, a vibrating motor, and a charging connector. The lineman stick 16 and the light signalling system 25 is in wireless connection with the central mobile unit 12, so that they are informed by the central mobile unit 12 about the events of the game. The central mobile unit 12 transmits, among others, the yellow and red penalty cards, so that the lineman stick display 24 can present such information to assistant referees within a very short time, and the light signalling system 25 lights up in the colour corresponding to the signals received. Suitably, the light signalling system 25 is fitted with LED lighting units and is connected to a power supply unit. The light signalling system 25 may also be connected to a processor, a control unit, and a converter. The central mobile unit 12, which is in fact an electronic penalty card, is fitted with a touchscreen 4, covered by a protruding foil 3, and a fingerprint scanning unit 19. The buttons located on the touchscreen 4 may be touched through the protruding foil 3. The touchscreen 4 is capable of detecting pressure, which may be achieved by using a touch-sensitive surface applying the principle of "resistive" or "capacitive" pressure detection, so that it can also detect the force of pressure, if necessary. The protruding foil 3 helps to position the finger of the referee above the buttons. A locked central mobile unit 12 may be used after the fingerprint scanning unit 19 detects the fingerprint of the referee, as the central mobile unit 12 can be unlocked with the finger of the referee only for security reasons. Both sides of the central mobile unit 12 can perform the same functions. Consequently, there is a touchscreen 4 on both sides of the central mobile unit 12, and they normally assigned to the team currently playing. One of the sides is always active, which is automatically the side facing upward within a range of sixty degrees in comparison to a horizontal position. The angle with a horizontal position is detected by the central mobile unit 12 through the acceleration sensor 5. The passive side is immune to touching or pressing a button. It is recommended to use the two touchscreens 4 so that one side displays information on one of the teams, and the other side displays information on the other team. It is recommended to enter the data of the teams before the game begins. It is also advantageous to upload the colour of each team, the number and name of each player, the starting team, and the substitute players before the game begins, but additional data may also be uploaded during the game. The bottom part of the touchscreen 4 may have the same colour as the corresponding team, so that it is easy to identify the screen associated with a given team. The current time and a clock measuring the length of the game can be displayed at the same part. Also, progress bar indicating the progress of the current half can be displayed on the lower part of the touchscreen 4. On the active side, a number of touch-buttons corresponding to the total number of players in the team is displayed, and each button is identified by the number of a player. A player identified by the number displayed on a button is given a yellow card or a red card by pressing the button once or twice, respectively, and the cards are erased by pressing the button three times. When a button is pressed, the name of the player is displayed in place of the half progress bar, providing a kind of control and feedback to the referee. If a button is pressed for a longer period, it changes the active/passive role of the given player, thereby allowing for the registration of replacements. Then, the button is inversed. The central mobile unit 12 may also be configured to light up in yellow automatically, and switch to red by pressing a single button, when the referee takes it out of his pocket. Thus, it can be used as a traditional coloured penalty card, and all functions are available thereafter, so that the penalty can be recorded for the player concerned. Data are recorded in the internal memory and control unit 18 and the server 15. Typically at the end of the game, the recorded data is forwarded by the internal memory and control unit 18 to the server 15 through the communication module 20, and to the central control device 23 through the server 15, using a suitably encrypted communication channel 14. If necessary for making use more secure, pressing a button may be accompanied by a lock function. This means that a button press is not accepted unless two buttons are pressed simultaneously, thereby preventing the buttons from being pressed accidentally. The second button required for this function may be located on the surface of the page or on the side. The lock function may also be implemented as sliding the touch-button to the side, meaning that a button does not only detect when its pressed, but it also detects when a finger is slid on the screen. Also, the lock function may be implemented by detecting the force of pressing a button. After a player and the colour of the card to be given is selected after pressing the button, the touchscreen 4 lights up in the corresponding colour (typically yellow or red) with high luminosity. The central mobile unit 12 also includes a communication module 20, a powerful noise-filtering microphone 17, an acceleration sensor 5, and a laser distance measuring unit 13. The communication module 20, the microphone 17, the acceleration sensor 5, and the distance measuring unit 13 are connected to the internal memory and control unit 18. In another implementation form, the communication module 20, the microphone 17, the acceleration sensor 5, and the distance measuring unit 13 each are fitted with an internal memory and control unit 18, and the communication module 20, the microphone 17, the acceleration sensor 5, and the distance measuring unit 13 are also connected to each other directly. The internal memory and control unit 18 is capable of storing all data pertaining to the game. The microphone 17 also makes it possible to record conversations, so that insults could be assessed later on, and official persons, such as the referee, can have a usable sound recording. The noise-filtering microphone 17 transmits the recorded materials to the internal memory and control unit 18, which stores the recorded sounds. The distance measuring unit 13 makes it possible to determine distances accurately; for example, in football, it is possible to measure the distance between the ball and the wall of players during a free kick or, in rugby, it is possible to measure the distance between the players and the attack lines. The arrangement can also handle situations where a yellow card also means that a player is sent off the field for a given period; in such a situation, the central mobile unit 12 indicates the expiry of the given period by vibrating, beeping, or lighting. The central mobile unit 12 can also produce signals and communicate using vibration and sounds when other functions are used, such as a button is pressed. The central mobile unit 12 also measures the time needed to deliver a judgement, i.e. during which period the central mobile unit 12 was in use. This feature helps referees to determine the length of overtime in sports where time may not be stopped but is measured continuously. In sports where the game clock may be stopped, the central mobile unit 12, as an option, is capable of stopping the clock automatically. The central mobile unit 12 may be fitted with IP68 protection, so that it is fully dust and water resistant. The central mobile unit 12 is approximately 5 to 12 cm wide, and its height is advantageously 8 to 15 cm.

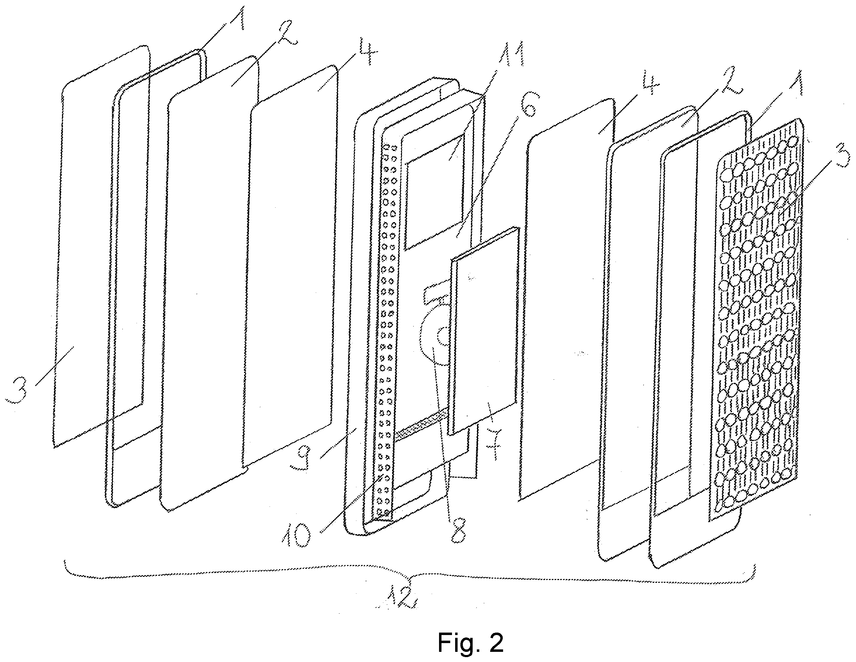

Figure 2 shows the central mobile unit 12 and its components in more detail. The central mobile unit 12 is fitted with two touchscreens 4, which may be implemented by various technical means, such as OLED, EPAPER, TFT, STN, or LCD. In this implementation form, the touchscreens 4 are protected by a glass surface 2 and a cover 1, and the central mobile unit 12 is protected by a protruding foil 3 as the most external layer. The touchscreen 4 is capable of producing light signals, of lighting in yellow or red, and it may be used with simple background lighting. Even the number of a player can be displayed against a yellow or red background. If the touchscreen 4 itself is not capable of lighting, these functions are enabled by the suitably LED-based lighting unit 10 installed in the central mobile unit 12 to minimize consumption. The lighting unit 10 installed in the central mobile unit 12 is located below the touchscreen 4. Depending on the display technology, the lighting unit 10 illuminates the edge of the transparent glass surface 2 located below the touchscreen 4, or it is located behind the touchscreen 4 and provides illumination from there. The power supply unit 7, which can be a battery for example, located in the central mobile unit 12 is charged through a wired or wireless connection. The power supply unit 7 may be charged during a game as well, if the docking station of the central mobile unit 12 also includes a power source. The docking station may be mounted on the clothing of the referee using a Velcro strip, a clip, or a magnetic device. Similarly, the central mobile unit 12 may be connected to the docking station using a Velcro strip, a clip, or a magnetic device. The central mobile unit 12 is fitted with an input unit 11, which is suitable for entering information, a typically transparent frame 9, a wireless charging coil 8 that enables wireless charging, and a printed circuit 6.

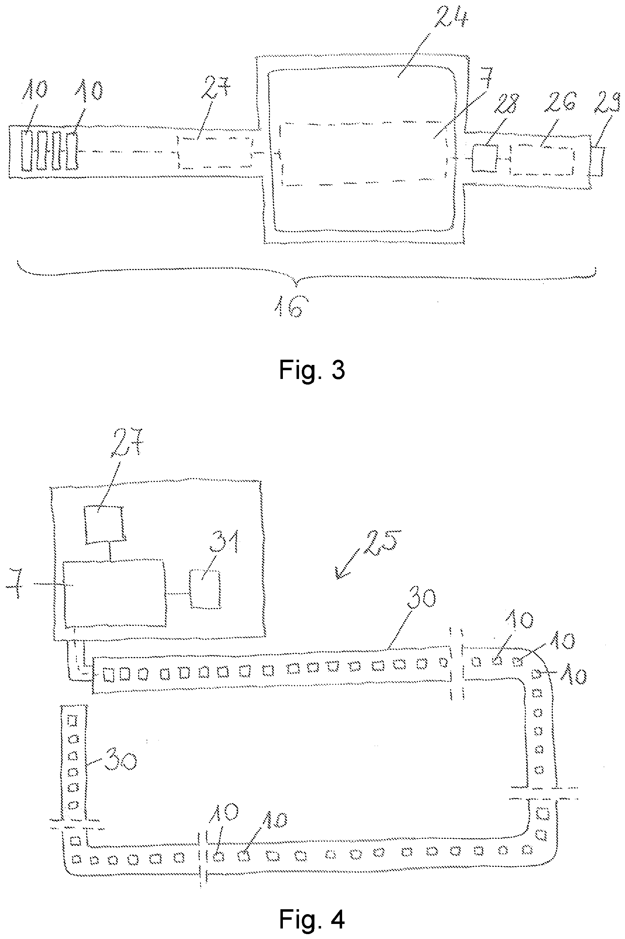

Figure 3 shows the lineman stick 16 in more detail. The lineman stick 16 is in wireless connection with the central mobile unit 12 and the central control device 23, as well as, optionally, the server 15, the camera 21, the offside and video referee system 22, and the light signalling system 25. In the implementation form shown in Figure 3, the lineman stick 16 includes a power supply unit 7, a lighting unit 10, a lineman stick display 24, a vibrating motor 26, a processor 27, a button 28, and a charging connector unit 29. It may also be fitted with a buzzer unit that is capable of producing warning sound signals. The lineman stick display 24 is optional, and it could be replaced by a connection to a smartphone display to show information. Suitably, four lighting units 10 are installed in the handle of the lineman stick 16, and they light up according to the event that occurred during the game. For example, the red LED may light up when the entire ball leaves the field through the side line or the base line. For example, the green LED may indicate a goal, i.e. when the entire ball crosses the goal line. For example, the yellow LED may light up when an offside offence is committed. For example, the blue LED may light up or blink when the device is switched on and operational. The button 28 is used to turn the device on and off, and to send queries regarding an offside offence. If it is pressed after a goal, the lineman stick display 24 replays the goal event, and it also turns on the lighting unit 10 to indicate that an offside offence occurred, if that is the case. The lineman stick display 24 shows images and other data received from the central mobile unit 12 and/or the central control device 23, such as: time, offside offence, other in-game data. The processor 27 and/or another control unit that may be installed in the lineman stick 16 optionally controls the vibrating motor 26 and receives data from the central mobile unit 12 and the central control device 23. Typically, the lineman stick 16 is fitted with its own power supply unit 7 installed in the lineman stick 16, which powers the lighting units 10, the lineman stick display 24, the vibrating motor 26, and the processor 27. The power supply unit 7 can be charged through the charging connector unit 29.

Figure 4 shows the connection diagram of the light signalling system 25. The light signalling system 25 includes the following components: a lighting strip 30 containing lighting units 10, a power supply unit 7 powering the lighting strip 30, a processor 27, and a converter 31. The lighting strip 30 goes along the side lines, base lines, and goal lines, and it lights up when the ball leaves the field by crossing the line, thereby giving a clear visual indication to the players, the referee, and the spectators. Suitably, the length of the lighting strip 30 is larger than the circumference of the given field. Only those lighting units 10 light up that are located at the section of the lighting strip 30 where the ball left the field by crossing a side line, base line, or goal line. Suitably, the lighting units 10 light up in both directions in a 25 cm long section calculated from the centre of the ball, that is in a total of 50 cm long section, along the line where the ball left the field. For example, it is capable of indicating the location of a throw-in, so that it is not executed from a more advantageous position than the actual place of the event. According to the rules, the ball has left the field if the entire ball crossed the painted line, and this matter may be decided based on its location (i.e. the vertical extension thereof) relative to the line painted on the grass. The light signalling system 25 is in wireless connection with the central mobile unit 12 and the central control device 23, as well as, optionally, the server 15, the lineman stick 16, the camera 21, and the offside and video referee system 22. If a penalty is applied, the central mobile unit 12 signals to the light signalling system 25, a yellow/red light can run along the lighting strip 30, as a quasi-show element, by turning on the lighting units 10 sequentially at a given time. Typically, the light signalling system 25 is fitted with its own power supply unit 7 installed in the light signalling system 25, which powers the lighting units 10, the processor 27, and the converter 31. The power supply unit 7 uses 12V voltage and a powerful DC/DC converter 31 to supply 5V voltage for the lighting units 10. A less powerful DC/DC converter 31 supplies 5V voltage for the processor 27. This setup ensures stability. Any number of lighting units 10, typically LEDs, may be serially connected. The light signalling system 25 includes internal safeguards, which reduce luminosity if too many lighting units 10 are turned on.

In the course of applying the invention to achieve the desired result, the team leaders, referees, or another authorized person upload, as a first step, the data of players and official persons participating in the game into the cloud system, server 15, central control device 23, or other server connected to or forming part of the arrangement. Thus, a list of players and other persons is displayed on the central mobile unit 12. In the hours before a game, the referee can verify the license of each person by reading the relevant sports federation codes, which may be affected by scanning or reading QR codes, bar codes, or personal IDs. This means that verification may be carried out on-the-spot before or even during a game. After verification, the central mobile unit 12 starts timing at the same time as the wristwatch of the referee. At the same time, the sound recording and the collection of video footage from the connected wide-angle camera is also commenced. Yellow and red cards given to players during a game are documented by the invention, so that the time and reason of giving a card to a player, as well as the time taken by the process is recorded. If a yellow or red card is issued as a penalty, it may also be displayed on the stadium screen immediately. If the referee is insulted, the events are recorded by the central mobile unit 12, fitted with a powerful microphone 17, to the internal memory and control unit 18, and then the data is transmitted for storage on the server 15 and the central control device 23. To avoid atrocities and to facilitate the adjudication of any eventual atrocity, the central mobile unit 12 is also connected to a wide-angle camera 21, a lineman stick 16, and the offside and video referee system 22. The relevant situations may also be displayed on the stadium screen. Violations detected by the offside and video referee system 22 are transmitted by the system to the lineman, and the information is passed on to the referee by the vibration or sound signals of the central mobile unit 12. Various violations are also sent to the lineman stick 16, so that the events and penalties are displayed for the assistant referee on the lineman stick display 24. The lineman stick 16 can also signal by lights and vibrations. At free-kick, the distance measuring unit 13 installed in the central mobile unit 12 indicates the distance between the ball and player, as well as the distance between the referee and the player, and it is displayed for the referee on the central mobile unit 12. At free-kick, the distance measuring unit 13 is capable of measuring distance from the starting position when a single button is pressed, and the information is communicated to the referee by voice. Such data is stored by the internal memory and control unit 18, the server 15, and the central control device 23. As the end of the game approaches, the central mobile unit 12 displays to the referee the amount of time taken from the net game time by events not forming part of the net game time, such as the issuance of yellow and red cards, injuries, and celebrations. In order to help the referee to decide, the central mobile unit 12 recommends a few alternatives for overtime, and the referee is also permitted to enter his own figures. The selected period of overtime is recorded and registered, similarly to other events of the gameplay. At the end of the game, the referee stops data recording on the central mobile unit 12. Then, the arrangement, typically the internal memory and control unit 18, produces a minutes of the game and sends it to the server 15 and the central control device 23, so that it may be forwarded to persons who submitted the list of players and to the storage space of the relevant associations. Suitably, the document contains only fundamental important concerning the game, so that the file remains small and may be forwarded easily. The result becomes officially accepted when both team leaders press the accept button after the game. If either team leader presses the reject button, the result is vetoed. If the result is vetoed, the result and the minutes is considered not accepted; the system transmits the request, together with the comments of the team leader, to the sports association concerned for adjudication.

The arrangement described above has numerous advantages. An advantage of the invention is that it is suitable for replacing the plastic cards currently used as penalty cards, so that it is connected to an entire system, including an offside and video referee system and a wide-angle camera, so that the penalty card is enhanced and turned into a complete arrangement that supports referees. A main component of the invention is the portable central mobile unit, which performs numerous functions and may be used as an electronic penalty card. On this central mobile unit, which has numerous advantageous features, it takes only a few seconds to register a yellow or a red card; in addition to being fitted with a special distance measurement device and a watch, it is also capable of produce light signals on both sides, recording and documenting video and audio material, and providing a means of communication. The central mobile unit may be implemented in the same size as the penalty cards currently in use; despite its small size, it also includes a battery, a microphone, a distance measurement device, a touchscreen, a lighting unit, and a fingerprint scanner, and it is also fully resistant to dust and water. It is another advantageous feature that the fingerprint scanner may be used to verify the identity of players. The arrangement facilitates communication between referees, it can stop the game clock, and it can manage and measure the time when a player is sent off the field. The arrangement makes it easier to document events of the game and to transmit data to the central control device; for example, necessary information may be sent to the stadium server in a very short time, and even data captured or recorded by the central mobile unit may be displayed on the stadium screen.

The field of application of the invention includes sports where the referee uses cards or penalty sheets to communicate penalties during the game, such as football, handball, or water polo.

In addition to the above examples, the invention can be implemented in other forms and with other manufacturing processes within the scope of protection, as defined by the appended claims.

## Claims

1. A referee support arrangement that includes a central mobile unit (12), a server (15), and a central control device (23); the central mobile unit (12) and the server (15) are connected via a wireless communication channel (14), and the server (15) and the central control device (23) are connected via a communication channel (14); the central mobile unit (12) includes an internal memory and control unit (18), a communication module (20), a power supply unit (7), a microphone (17), and one or more touchscreens (4), wherein the arrangement includes a lineman stick (16), a camera (21), an offside and video referee system (22), and a light signalling system (25) via a wireless communication channel (14);
wherein the central mobile unit (12) is connected to a lineman stick (16), a camera (21), an offside and video referee system (22), and a light signalling system (25) via a wireless communication channel (14); the central mobile unit (12) is fitted with a distance measuring unit (13) and a lighting unit (10); the communication module (20), the distance measuring unit (13), and the microphone (17) are connected to an internal memory and control unit (18); the lineman stick (16) is fitted with at least one lighting unit (10); the light signalling system (25) is fitted with a lighting strip (30) containing lighting units (10).

2. The arrangement according to claim 1, **characterized in that** the central mobile unit (12) is fitted with two touchscreens (4); each touchscreen (4) is assigned to one of the two teams playing each other; the touchscreens (4) are mounted onto two opposing sides of the central mobile unit (12).

3. The arrangement according to claim 1 or 2, **characterized in that** the central mobile unit (12) is connected to the server (15), the lineman stick (16), the camera (21), the offside and video referee system (22), and the light signalling system (25) by a communication module (20).

4. Any of the arrangements according to claims 1 to 3, **characterized in that** the central mobile unit (12) includes a fingerprint scanning unit (19) and/or an acceleration sensor (5), and the fingerprint scanning unit (19) and the acceleration sensor (5) is connected to the internal memory and control unit (18).

5. Any of the arrangements according to claims 1 to 4, **characterized in that** the central control device (23) is connected to the lineman stick (16) and/or the camera (21) and/or the offside and video referee system (22) and/or the light signalling system (25) directly through a wireless communication channel (14).

6. Any of the arrangements according to claims 1 to 5, **characterized in that** the touchscreen (4) is covered by a glass surface (2), a cover (1), and a protruding foil (3), and the edge of the central mobile unit (12) is surrounded by a frame (9).

7. Any of the arrangements according to claims 1 to 6, **characterized in that** the central mobile unit (12) is fitted with an even number of and advantageously totalling to two glass surfaces (2), two covers (1), and two protruding foils (3) that are located on the two opposing sides of the central mobile unit in equal numbers.

8. Any of the arrangements according to claims 1 to 7, **characterized in that** a wireless charging coil (8) is installed in the central mobile unit (12).

9. Any of the arrangements according to claims 1 to 8, **characterized in that** the lineman stick (16) is fitted with a processor (27), a power supply unit (7) and a button (28) connected to the processor (27), and a vibrating motor (26) and a charging connector unit (29) connected to the power supply unit (7).

10. Any of the arrangements according to claims 1 to 9, **characterized in that** the light signalling system (25) is fitted with a power supply unit (7) connected to the lighting strip (30), a processor (27) connected to the power supply unit (7) and at least one converter (31).

11. Any of the arrangements according to claims 1 to 10, **characterized in that** the lineman stick (16) is fitted with a lineman stick display (24).

## Patentansprüche

1. Anordnung zur Unterstützung von Schiedsrichtern, die eine zentrale mobile Einheit (12), einen Server (15) und eine zentrale Steuervorrichtung (23) umfasst; die zentrale mobile Einheit (12) und der Server (15) sind über einen drahtlosen Kommunikationskanal (14) verbunden, und der Server (15) und die zentrale Steuervorrichtung (23) sind über einen Kommunikationskanal (14) verbunden; die zentrale mobile Einheit (12) umfasst eine interne Speicher- und Steuereinheit (18), ein Kommunikationsmodul (20), eine Stromversorgungseinheit (7), ein Mikrofon (17) und einen oder mehrere Touchscreens (4), **dadurch gekennzeichnet, dass** die Anordnung einen Linienrichterstab (16), eine Kamera (21), ein Abseits- und Videoschiedsrichtersystem (22) und ein Lichtsignalsystem (25) über einen drahtlosen Kommunikationskanal (14) umfasst;
**dadurch gekennzeichnet, dass** die zentrale mobile Einheit (12) mit einem Linienrichterstab (16), einer Kamera (21), einem Abseits- und Videoschiedsrichtersystem (22) und einem Lichtsignalsystem (25) über einen drahtlosen Kommunikationskanal (14) verbunden ist; die zentrale mobile Einheit (12) ist mit einer Entfernungsmesseinheit (13) und einer Beleuchtungseinheit (10) ausgestattet; das Kommunikationsmodul (20), die Entfernungsmesseinheit (13), und das Mikrofon (17) sind mit einer internen Speicher- und Steuereinheit (18) verbunden; der Lineman Stick (16) ist mit mindestens einer Beleuchtungseinheit (10) ausgestattet; das Lichtsignalsystem (25) ist mit einem Beleuchtungsstreifen (30) ausgestattet, der Beleuchtungseinheiten (10) enthält.

2. Die Anordnung nach Anspruch 1, **dadurch gekennzeichnet, dass** die zentrale mobile Einheit (12) mit zwei Touchscreens (4) ausgestattet ist; jeder Touchscreen (4) ist einer der beiden gegeneinander spielenden Mannschaften zugeordnet; die Touchscreens (4) sind an zwei gegenüberliegenden Seiten der zentralen mobilen Einheit (12) angebracht.

3. Die Anordnung nach Anspruch 1 oder 2, **dadurch gekennzeichnet, dass** die zentrale mobile Einheit (12) mit dem Server (15), dem Linienrichterstab (16), der Kamera (21), dem Abseits- und Videoschiedsrichtersystem (22) und dem Lichtsignalsystem (25) über ein Kommunikationsmodul (20) verbunden ist.

4. Jede der Anordnungen nach einem der Patentansprüche 1 bis 3, **dadurch gekennzeichnet, dass** die zentrale mobile Einheit (12) eine Fingerabdruck-Scaneinheit (19) und/oder einen Beschleunigungssensor (5) aufweist, und die Fingerabdruck-Scaneinheit (19) und der Beschleunigungssensor (5) mit der internen Speicher- und Steuereinheit (18) verbunden sind.

5. Jede der Anordnungen nach Patentansprüchen **1** bis 4, **dadurch gekennzeichnet, dass** die zentrale Steuereinrichtung (23) mit dem Linienrichterstab (16) und/oder der Kamera (21) und/oder dem Abseits- und Videoschiedsrichtersystem (22) und/oder der Lichtsignalanlage (25) direkt über einen drahtlosen Kommunikationskanal (14) verbunden ist.

6. Jede der Anordnungen nach Patentansprüchen **1** bis 5, **dadurch gekennzeichnet, dass** der Touchscreen (4) von einer Glasfläche (2), einer Abdeckung **(1),** und einer vorstehenden Folie (3) abgedeckt ist, und der Rand der zentralen mobilen Einheit (12) von einem Rahmen (9) umgeben ist.

7. Jede der Anordnungen nach Patentansprüchen **1** bis 6, **dadurch gekennzeichnet, dass** die zentrale mobile Einheit (12) mit einer geraden Anzahl von und vorteilhafterweise insgesamt zwei Glasflächen (2), zwei Abdeckungen **(1),** und zwei vorstehenden Folien (3) ausgestattet ist, die sich in gleicher Anzahl auf den beiden gegenüberliegenden Seiten der zentralen mobilen Einheit befinden.

8. Jede der Anordnungen nach Patentansprüchen **1** bis 7, **dadurch gekennzeichnet, dass** eine drahtlose Ladespule (8) in der zentralen mobilen Einheit (12) eingebaut ist.

9. Jede der Anordnungen nach Patentansprüchen **1** bis 8, **dadurch gekennzeichnet, dass** der Linienrichterstab (16) mit einem Prozessor (27), einer Stromversorgungseinheit (7) und einer Taste (28), die mit dem Prozessor (27) verbunden ist, sowie einem Vibrationsmotor (26) und einer Ladeanschlusseinheit (29), die mit der Stromversorgungseinheit (7) verbunden ist, ausgestattet ist.

10. Jede der Anordnungen nach Patentansprüchen **1** bis 9, **dadurch gekennzeichnet, dass** die Lichtsignalanlage (25) mit einer Stromversorgungseinheit (7), welche mit der Lichtleiste (30) verbunden ist, einem Prozessor (27), welcher mit der Stromversorgungseinheit (7) verbunden ist und mindestens einem Konverter (31) ausgestattet ist.

11. Jede der Anordnungen nach Patentansprüchen **1** bis 10, **dadurch gekennzeichnet, dass** der Linienrichterstab (16) mit einer Linienrichterstabanzeige (24) ausgestattet ist.

## Revendications

1. Dispositif destiné à assister un arbitre, qui comprend une unité centrale mobile (12), un serveur (15) et un dispositif de commande central (23) ; l'unité centrale mobile (12) et le serveur (15) sont reliés via un canal de communication sans fil (14), et le serveur (15) et le dispositif de commande central (23) sont reliés via un canal de communication (14) ; l'unité centrale mobile (12) comporte un appareil interne de mémoire et de commande (18), un module de communication (20), un dispositif d'alimentation électrique (7), un microphone (17), et un ou plusieurs écrans tactiles (4), **caractérisé en ce que** l'agencement comprend un bâton d'arbitre assistant (16), une caméra (21), un système d'assistance vidéo à l'arbitrage et au hors-jeu (22), et un dispositif de signalisation lumineuse (25) via un canal de communication sans fil (14);
**caractérisé en ce que** l'unité centrale mobile (12) est connectée à un bâton d'arbitre assistant (16), à une caméra (21), à l'assistance vidéo à l'arbitrage et au hors-jeu (22), et à un dispositif de signalisation lumineuse (25) par l'intermédiaire d'un canal de communication sans fil (14); l'unité centrale mobile (12) est équipée d'un dispositif de mesure de distance (13) et d'un dispositif d'éclairage (10); le module de communication (20), le dispositif de mesure de distance (13), et le microphone (17) sont reliés à un appareil interne de mémoire et de commande (18); le bâton d'arbitre assistant (16) est équipé d'au moins un dispositif d'éclairage (10); le système de signalisation lumineuse (25) est équipé d'une bande lumineuse (30) contenant des appareils d'éclairage (10).

2. L'agencement selon la revendication 1, **est caractérisé en ce que** l'unité centrale mobile (12) est équipée de deux écrans tactiles (4); chaque écran tactile (4) est attribué à l'une des deux équipes qui se rencontrent; les écrans tactiles (4) sont disposés sur deux côtés opposés de l'unité centrale mobile (12).

3. L'agencement selon la revendication 1 ou 2, **est caractérisé en ce que** l'unité centrale mobile (12) est reliée au serveur (15), au bâton d'arbitre assistant (16), à la caméra (21), au système d'assistance vidéo à l'arbitrage et au hors-jeu (22), et au système de signalisation lumineuse (25) par un module de communication (20).

4. Tout agencement selon les revendications 1 à 3, **est caractérisé en ce que** l'unité centrale mobile (12) comprend un dispositif de lecture d'empreintes digitales (19) et/ou un capteur d'accélération (5), et le dispositif de lecture d'empreintes digitales (19) et le capteur d'accélération (5) sont connectés à l'appareil interne de mémoire et de commande (18).

5. Tout agencement selon les revendications **1** à 4, **est caractérisé en ce que** l'unité centrale mobile (23) est connectée au bâton d'arbitre assistant (16) et/ou à la caméra (21) et/ou au système d'assistance vidéo à l'arbitrage et au hors-jeu (22) et/ou au système de signalisation lumineuse (25) directement par un canal de communication sans fil (14).

6. Tout agencement selon les revendications **1** à 5, **est caractérisé en ce que** l'écran tactile (4) est recouvert d'une surface en verre (2), d'un couvercle **(1),** et d'une pellicule saillante (3), et le bord de l'unité centrale mobile (12) est entouré d'un cadre (9).

7. Tout agencement selon les revendications **1** à 6, **est caractérisé en ce que** l'unité centrale mobile (12) est équipée d'un nombre pair et totalisant avantageusement deux surfaces vitrées (2), deux couvercles **(1),** et deux pellicules saillantes (3) situés en nombre égal sur les deux côtés opposés de l'unité centrale mobile.

8. Tout agencement selon les revendications **1** à 7, **est caractérisé en ce que** une bobine de charge sans fil (8) est intégrée à l'unité centrale mobile (12).

9. Tout agencement selon les revendications **1** à 8, **est caractérisé en ce que** le bâton d'arbitre assistant. (16) est équipé d'un processeur (27), d'un dispositif d'alimentation électrique (7) et d'un bouton (28) relié au processeur (27), d'un moteur vibrant (26) et d'un appareil de connexion de charge (29) relié au dispositif d'alimentation électrique (7).

10. Tout agencement selon les revendications **1** à 9, **est caractérisé en ce que** le système de signalisation lumineuse (25) est équipé d'un dispositif d'alimentation électrique (7) relié à la bande lumineuse (30), d'un processeur. (27) relié au dispositif d'alimentation électrique (7) et d'au moins un convertisseur (31).

11. Tout agencement selon les revendications **1** à 10, **est caractérisé en ce que** le bâton d'arbitre assistant (16) est équipé d'un écran de bâton d'arbitre assistant (24).
